# EUROPÄISCHE PATENTSCHRIFT

(11) **EP 2 246 680 B1**
(45) Veröffentlichungstag und Bekanntmachung des Hinweises auf die Patenterteilung: **25.04.2018**
(21) Anmeldenummer: 10157965.4
(22) Anmeldetag: 26.03.2010
(51) Int. Cl.: G01L 1/22, G01L 3/10, B25B 23/14, B25B 23/147

(54) **Elektrowerkzeug mit einer berührungslosen Drehmomentmesseinrichtung und Verfahren zum Messen des Drehmomentes bei einem Elektrowerkzeug**
Electric tool with a contactless torque measurement device and method for measuring the torque of an electric tool
Outil électrique doté d'un dispositif de mesure de couple sans contact et procédé de mesure du couple pour un outil électrique

(30) Priorität: 30.04.2009 DE 102009020759; 02.07.2009 DE 102009031971
(43) Veröffentlichungstag der Anmeldung: 03.11.2010
(73) Patentinhaber: C. & E. Fein GmbH, 73529 Schwäbisch Gmünd-Bargau (DE)
(72) Erfinder: Zebisch, Reiner, 73540 Heubach (DE)
(74) Vertreter: Witte, Weller & Partner Patentanwälte mbB

(56) Entgegenhaltungen:
- EP-A1- 1 677 022
- EP-A2- 0 659 525
- EP-A2- 1 650 540
- DE-A1- 2 657 843
- DE-A1- 4 307 131

## Beschreibung

Die Erfindung betrifft ein Elektrowerkzeug, insbesondere einen Schrauber, mit einer berührungslosen Drehmomentmesseinrichtung, mit einem in einem Gehäuse aufgenommenen Motor, mit einer Motorwelle, die eine Antriebswelle zum Antrieb eines Werkzeugs antreibt, und mit einem Drehmomentsensor zur Messung des Drehmoments.

Die Erfindung betrifft ferner ein Verfahren zur Messung des Drehmomentes bei einem Elektrowerkzeug mit berührungsloser Übertragung.

Bei Schraubern wird immer häufiger beim Anziehen einer Verschraubung eine korrekte Einhaltung eines vorgegeben Anzugsdrehmomentes gefordert. Hierzu muss der Schrauber mit einem genau arbeitenden System versehen sein, das eine Abschaltung des Schraubers bei Erreichen eines vorgegebenen Anzugsmomentes gewährleistet.

Im Stand der Technik sind hierzu verschiedene mechanische Lösungen zum Beispiel mit Abschaltkupplungen oder andere Maßnahmen bekannt, die jedoch immer eine gewisse Ungenauigkeit aufweisen. Ein Grund hierfür liegt neben der grundsätzlichen Ungenauigkeit von mechanischen Lösungen u.a. in der unterschiedlichen Abschaltcharakteristik bei weichen Schraubfällen, d.h. bei gegen Ende der Verschraubung langsam ansteigendem Drehmoment, und bei harten Schraubfällen, d.h. bei sehr plötzlichem Anstieg des Drehmomentes gegen Ende der Verschraubung.

Grundsätzlich wäre daher eine präzise Messung des Drehmomentes wünschenswerk. Auch zu Dokumentationszwecken wäre eine Drehmomentmessung vorteilhaft.

Gemäß der WO 2008/093625 A1 ist eine Vorrichtung zur Detektion des Drehmomentes an einem Elektromotor bekannt, bei dem das über ein Planetenradgetriebe aufgenommene Reaktionsmoment über einen Dehnungssensor erfasst wird und so zur Messung des Drehmomentes herangezogen wird.

Eine derartige Anordnung hat allerdings den Nachteil, dass die Reaktionsgeschwindigkeit über das Planetenradgetriebe verlangsamt wird und dass durch die indirekte Erfassung des Drehmomentes die Genauigkeit verschlechtert wird. Auch kommt der Einsatz eines Planetenradgetriebes nur für einige Anwendungsfälle in Frage. Schließlich können harte und weiche Schraubfälle zu unterschiedlichen Ergebnissen führen.

Aus der EP 0 482 120 B1 ist ein drahtlos arbeitender Sensor zur Detektion mechanischer Einflüsse auf einen zu vermessenden Gegenstand bekannt, bei dem ein Element aus einem magnetoelastischen Material verwendet wird, das einen elektrischen Resonanzkreis mit einer elektrischen Spule, die induktiv mit dem Element gekoppelt ist, verstimmt, wobei eine Antenne mit dem Resonanzkreis gekoppelt ist, um ein Messsignal zu übertragen.

Die bekannte Anordnung erfordert allerdings eine HF-Übertragung eines Funksignals und eine zugeordnete Antenne. Die Auswertung ist relativ aufwändig, insbesondere wegen der Nichtlinearität des Signals.

Gemäß der US 2003/0200814 A1 wird eine Induktionsschleife verwendet, die wenigstens teilweise aus einem magnetostriktiven Material mit einer nicht linearen Strom-Spannungsabhängigkeit besteht. Eine Spule wird verwendet, um auf die Induktionsschleife eine Wechselspannung zu übertragen. Die nichtlineare Antwort des induzierten Stroms wird mittels einer Sensorspule erfasst und das Ausgangssignal hiervon ausgewertet, um das gewünschte Messsignal zu erhalten. Zur Auswertung ist eine separate Empfangsspule erforderlich.

Der Aufbau mit mehreren Spulen führt zu einem relativ komplizierten Aufbau mit größerem Platzbedarf.

Aus der EP 1 650 540 A2 ist ein Sensorsystem für eine Werkzeugmaschine bekannt, bei dem eine Sensoreinrichtung im Bereich des Werkzeugs induktiv mit Energie versorgt wird und das von der Sensoreinrichtung erzeugte Ausgangssignal drahtlos über Funk an eine stationäre Einheit übertragen wird.

Der Aufbau mit einer separaten Funktrecke ist relativ aufwändig und störungsanfällig.

Aus der DE 43 07 131 A1 ist ferner ein Schrauber mit elektronischer Drehmomentbegrenzung bekannt, bei dem eine Statorspule induktiv über eine Wechselspannung mit Energie versorgt wird. Über diese Anordnung soll auch Messinformation von einer Drehmomenterfassung auf das stationäre Getriebegehäuse übertragen werden.

Wie eine solche Übertragung erfolgen soll, ist jedoch nicht offenbart.

Aus der DE 26 57 843 A1 ist ferner ein Drehmomentmesssystem für eine Kraftmaschine bekannt, bei der zur Messung des Drehmomentes Dehnungsmessstreifen in Form einer Brückenschaltung vorgesehen sind, die induktiv mit Spannung versorgt werden. Das Messsignal wird verstärkt und mittels eines frequenzmodulierten Senders über eine Antenne übertragen.

Die Aufgabe der Erfindung besteht somit darin, ein Elektrowerkzeug mit einer berührungslosen Drehmomentmesseinrichtung und ein Verfahren zum Messen eines Drehmomentes bei einem Elektrowerkzeug zu offenbaren, womit eine möglichst zuverlässige Drehmomentmessung ermöglicht wird und gleichzeitig ein platzsparender, einfacher und kostengünstiger Aufbau realisiert werden kann.

Diese Aufgabe wird durch eine Vorrichtung gemäß Anspruch 1 und durch ein Verfahren gemäß Anspruch 14 gelöst.

Die Aufgabe der Erfindung wird auf diese Weise vollkommen gelöst.

Erfindungsgemäß werden nämlich lediglich zwei induktiv miteinander gekoppelte Spulen verwendet, die bidirektional betrieben werden, um einerseits eine Energieversorgung der rotierenden Spule zu ermöglichen und um andererseits eine Übertragung des Drehmomentmesssignals über die rotierende Spule auf die stationäre Spule zu ermöglichen. Anstelle von zwei getrennten Spulenpaaren zur Energieübertragung und zur Messsignalübertragung reicht erfindungsgemäß ein einziges Spulenpaar aus, um den Drehmomentsensor mit Energie zu versorgen und um das Messsignal auf die stationäre Spule zu übertragen.

Dies erlaubt einen besonders einfachen und platzsparenden Aufbau.

In vorteilhafter Weiterbildung der Erfindung wird hierbei über die beiden Spulen ein Trägersignal übertragen, das mit einer für das Ausgangssignal des Drehmomentsensors repräsentativen Frequenz moduliert wird.

Das Trägersignal ist hierbei vorzugsweise ein hochfrequentes Signal, vorzugsweise ein Rechtecksignal mit einer Frequenz von mindestens 1 MHz, und das Modulationssignal ist ein Signal mit niedrigerer Frequenz als das Trägersignal, vorzugsweise ein Rechtecksignal mit einer Frequenz von höchstens 200 KHz.

Durch diese Maßnahmen lässt sich eine Energieübertragung zur Energieversorgung der rotierenden Spule einerseits mit der Übertragung eines Messsignals in der Gegenrichtung andererseits besonders gut kombinieren. Indem ein ausreichender Frequenzabstand zwischen dem Trägersignal und dem Modulationssignal verwendet wird, lässt sich eine saubere Trennung und Aufbereitung des Modulationssignals erreichen, um ein präzises Messsignal zu erhalten.

Gemäß einer weiteren Ausgestaltung der Erfindung ist die erste Spule mit einer ersten Treiberschaltung gekoppelt, über die ein Trägersignal auf die erste Spule übertragen wird, wobei die zweite Spule mit einer Versorgungsschaltung gekoppelt ist, die aus dem Trägersignal eine Versorgungsspannung erzeugt, und wobei der Drehmomentsensor ein Ausgangssignal erzeugt, das über eine zweite Treiberschaltung als Modulationssignal auf das Trägersignal aufmoduliert wird, wobei die erste Spule mit einer Auswerteschaltung gekoppelt ist, die das Modulationssignal auswertet, um ein Drehmomentausgangssignal zu erzeugen, das repräsentativ für ein auf die Antriebswelle wirkendes Drehmoment ist.

So lässt sich auf einfache und vorteilhafte Weise eine Übertragung und Auswertung des Messignals an der stationären Spule gewährleisten.

Gemäß einer weiteren Ausgestaltung der Erfindung ist der Drehmomentsensor als Dehnungsmessstreifen ausgebildet.

Dehnungsmessstreifen stehen in zahlreichen Ausführungen zur Verfügung und ermöglichen eine hochgenaue Erfassung von Dehnungen bzw. Torsionen, um davon abgeleitet ein Drehmomentmesssignal zu erzeugen.

In bevorzugter Weiterbildung der Erfindung weisen die Spulen Windungen in Form von auf elektronischen Leiterplatten ausgebildeten Leiterbahnen auf. Vorzugsweise kann es sich hierbei um zweiseitig geätzte Leiterplatten handeln.

Auf diese Weise lässt sich ein sehr einfacher und kompakter Aufbau der Spulen gewährleisten. Diese können gleichzeitig mit der jeweiligen Elektronik kombiniert auf einer oder mehreren elektronischen Leiterplatten ausgebildet werden. Durch eine derartige Gestaltung lässt sich ein sehr zuverlässiger und platzsparender Aufbau realisieren.

Durch den industriellen Fertigungsprozess von Leiterplatten ist eine prozesssichere, hochgenaue und reproduzierbare Herstellung der Leiterplatten gewährleistet.

In weiter vorteilhafter Ausgestaltung der Erfindung weisen die beiden Spulen die gleiche Windungszahl und Geometrie auf und können somit identisch aufgebaut sein.

Hierdurch wird eine sehr zuverlässige und wirkungsvolle induktive Kopplung zwischen den beiden Spulen ermöglicht. Durch den identischen Aufbau lässt sich eine einfache und platzsparende Lösung realisieren.

Gemäß einer weiteren Ausgestaltung der Erfindung weisen die Spulen spiralförmig verlaufende Windungen auf.

Dies erlaubt eine einfache Ausgestaltung der Windungen der Spule als Leiterbahnenen auf elektronischen Leiterplatten.

Gemäß einer weiteren Ausgestaltung der Erfindung ist die zweite Spule über einen Gleichrichter mit einem Spannungsregler verbunden, der eine Referenzspannung erzeugt.

Die Referenzspannung kann vorteilhaft zur Spannungsversorgung des Drehmomentsensors genutzt werden.

In zusätzlicher Weiterbildung dieser Ausführung ist der Drehmomensensor in Form eines Dehnungsmessstreifens als Widerstandsmessbrücke ausgeführt, von der zwei Anschlüsse mit der Referenzspannung versorgt sind und zwei Anschlüsse mit dem Dehnungsmessstreifen verbunden sind, und wobei der Ausgang der Widerstandsmessbrücke mit einem Verstärker gekoppelt ist.

Auf diese Weise kann ein Dehnungsmessstreifen zur Drehmomentmessung verwendet werden, wodurch eine hochempfindliche und genaue Drehmomenterfassung gewährleistet ist.

Gemäß einer weiteren Ausgestaltung der Erfindung wird das verstärkte Ausgangssignal des Drehmomentsensors über einen Spannungs-Frequenz-Wandler in ein Frequenzsignal umgesetzt.

Auf diese Weise kann das Ausgangssignal des Drehmomentsensors in einfacher Weise auf das Trägersignal aufmoduliert und auf die erste Spule übertragen werden.

in bevorzugter Weiterbildung dieser Ausführung wird das Trägersignal hierbei über einen Lastwiderstand auf das Trägersignal an der zweiten Spule aufmoduliert.

Durch diese Ausführung ergibt sich ein sehr einfacher Aufbau. Es ergibt sich eine zusätzliche Last im Stromkreis der zweiten Spule, die entsprechend auch über die induktive Kopplung auf die erste Spule übertragen wird und dort ausgewertet werden kann.

In einer weiteren Ausgestaltung der Erfindung weist der erste Treiber einen Oszillator auf, dessen Ausgangssignal vorzugsweise über einen MOSFET-Treiber und einen Kondensator mit der ersten Spule gekoppelt ist.

Auf diese Weise lässt sich ein störungssicheres, hochfrequentes Trägersignal über die erste Spule auf die zweite Spule übertragen.

Gemäß einer weiteren Ausgestaltung der Erfindung ist im Stromkreis der ersten Spule ein Stromsensor, vorzugsweise ein Strommesswiderstand vorgesehen, der mit einer Auswerteelektronik zur Verstärkung des aufmodulierten Signals gekoppelt ist.

Auf diese Weise ist eine einfache Erfassung und Aufbereitung des aufmodulierten Signals ermöglicht, um ein Drehmomentausgangssignal zu erhalten, das repräsentativ für das erfasste Drehmoment ist.

Gemäß einer weiteren Ausgestaltung der Erfindung ist die am Stromsensor abfallende Spannung über einen Filter mit einem Komparator gekoppelt, der als Drehmomentausgangssignal eine dem Drehmoment proportionale Messfrequenz ausgibt.

Durch die Filterung lässt sich eine Trennung des aufmodulierten Signals vom Trägersignal erreichen und mit Hilfe des Komparators eine Verstärkung, so dass als Ausgangssignal eine dem Drehmoment proportionale Messfrequenz ausreichender Signalstärke erreicht wird.

Es versteht sich, dass das erzeugte Drehmomentausgangssignal in beliebiger Weise ausgewertet und weiterverarbeitet werden kann, um geeignete Steuerungsfunktionen oder andere Funktionen zu realisieren. So kann das Drehmomentausgangssignal beispielsweise zur Abschaltung eines Schraubers bei Erreichen eines vorgegebenen Anzugsmomentes genutzt werden. Auch kann das Signal aufgezeichnet, gespeichert oder angezeigt werden, beispielsweise für Dokumentationszwecke. Des Weiteren kann das Drehmomentausgangssignal zur Erkennung von Überlastzuständen genutzt werden, um eine Schnellabschaltung des Elektrowerkzeuges zu erreichen.

Weitere Merkmale und Vorteile der Erfindung ergeben sich aus der nachfolgenden Beschreibung unter Bezugnahme auf die Zeichnung. Es zeigen:
- Fig. 1: eine vereinfachte Darstellung eines erfindungsgemäßen Elektrowerkzeuges;
- Fig. 2: einen Schaltplan der Drehmomentmesseinrichtung gemäß Fig. 1;
- Fig. 3: eine vergrößerte Darstellung der beiden Schaltungskarten und ihre Anordnung an der Motorwelle und
- Fig. 4: eine vergrößerte Ansicht der zweiten Spule.

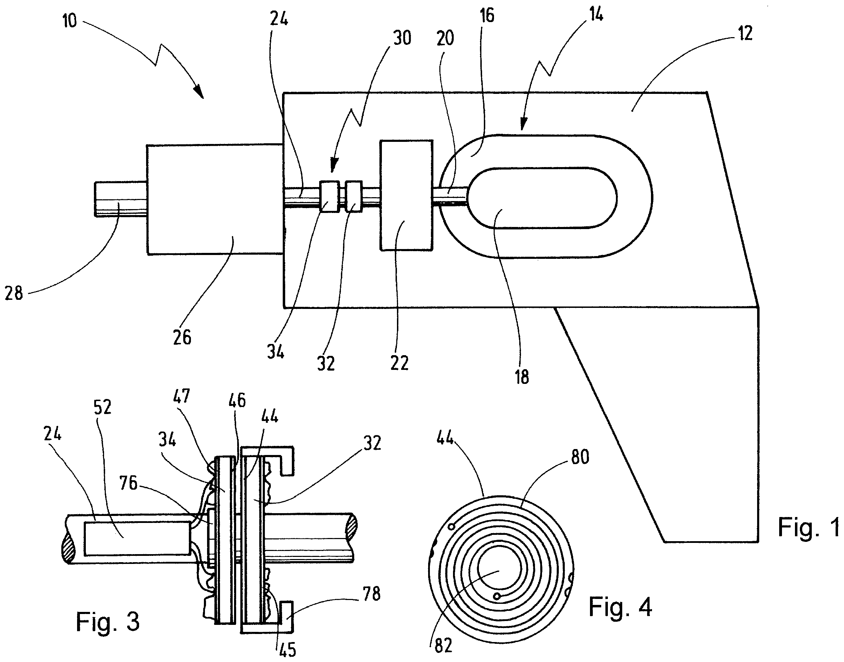

Fig. 1 ist ein erfindungsgemäßes Elektrowerkzeug stark vereinfacht dargestellt und insgesamt mit der Ziffer 10 bezeichnet. Es handelt sich im dargestellten Fall um einen Schrauber in Pistolenform. Das Elektrowerkzeug 10 weist ein Gehäuse 12 auf, in dem ein Elektromotor 14 aufgenommen ist, der einen Stator 16 und einen Rotor 18 aufweist. Der Rotor 18 ist mit einer Motorwelle 20 verbunden, die ein Getriebe 22 antreibt, von dem eine Antriebswelle 24 getrieben wird. Die Antriebswelle 24 ist schließlich mit einer Werkzeugaufnahme 26 verbunden, an der ein Werkzeug 28 lösbar befestigt ist. Im vorliegenden Fall kann es sich beispielsweise um ein Schrauber-Bit handeln.

Dieses an sich bekannte Elektrowerkzeug 10 ist nun erfindungsgemäß zusätzlich mit einer berührungslos arbeitenden Drehmomentmesseinrichtung ausgestattet, die insgesamt mit der Ziffer 30 bezeichnet ist. Die Drehmomentmesseinrichtung 30 weist zwei Baugruppen auf, eine erste stationäre Baugruppe 32, die am Gehäuse 12 befestigt ist, sowie eine zweite rotierende Baugruppe 34, die an der Antriebwelle 24 befestigt ist. An jeder Baugruppe 32, 34 ist, wie nachfolgend noch näher erläutert wird, eine Spule ausgebildet. Die beiden Spulen sind in einem derart geringem Abstand voneinander (etwa 0,5 bis 2,5 mm) angeordnet, so dass eine induktive Kopplung zwischen den beiden Spulen gewährleistet ist.

Die beiden Spulen dienen zur bidirektionalen Energieübertragung mit einem Trägersignal zur Energieversorgung der rotierenden Baugruppe 34 und mit einem aufmodulierten Messsignal, das repräsentativ für das erfasste Drehmoment ist und das auf die stationäre Spule übertragen wird.

Die gesamte Drehmomentmesseinrichtung 30 umfasst lediglich zwei Baugruppen 32, 34 und einen Drehmomentsensor 52 in Form eines Dehnungsmessstreifens (Fig. 3). Die gesamte Elektronik ist auf den beiden Baugruppen 32, 34 untergebracht. Die Baugruppen 32, 34 umfassen jeweils eine Bestückungsplatine 45 bzw. 47 und eine damit verbundene Platine, auf der die Spule 44 bzw. 46 ausgebildet ist. Die Bestückungsplatinenen 45, 47 und die Platinen, auf denen die Spulen 44, 46 ausgebildet sind, sind als zweiseitig geätzte Leiterplatten ausgeführt. Die Spulen 44, 46 sind mit Windungen 80 in Form von geätzten Leiterbahnen auf der Platine ausgebildet, wie in Fig. 4 beispielhaft dargestellt ist. Die Spulen 44, 46 sind von ihrer Geometrie her identisch aufgebaut und weisen die gleiche Windungszahl auf, im vorliegenden Fall jeweils 13 Windungen (in Fig. 4 sind weniger Windungen beispielhaft dargestellt). Die Windungen sind beidseitig spiralformig angeordnet, was eine einfache Anordnung auf einer Leiterplatte ermöglicht.

Es versteht sich, dass in Abhängigkeit vom jeweiligen Anwendungsfall auch andere Windungszahlen und andere Geometrien in Frage kommen und dass die beiden Spulen 44, 46 grundsätzlich auch unterschiedlich ausgebildet sein können. In jedem Falle sind die beiden Spulen 44, 46 jedoch derart räumlich nahe zueinander angeordnet, dass eine induktive Kopplung zwischen den Spulen 44, 46 gewährleistet ist.

An der Platine jeder Spule 44, 46 ist eine zentrale Bohrung 82 (Fig. 4) vorgesehen, so dass diese von der Antriebswelle 24 durchsetzt montiert werden kann, wie in Fig. 3 angedeutet. Die erste Baugruppe 32 umfasst die Bestückungsplatine 45 mit den Elektronikbauteilen und die damit gekoppelte Spulenplatine, auf der die erste Spule 44 angeordnet ist. Die erste Baugruppe 32 ist mittels geeigneter Halter 78 am Gehäuse 12 befestigt. Die zweite Baugruppe 34 umfasst die Bestückungsplatine 47 mit den Elektronikbauteilen und die damit gekoppelte Spulenplatine, auf der die zweite Spule 46 angeordnet ist. Die zweite Baugruppe 34 ist gemäß Fig. 3 mittels eines Rings 76 auf der Antriebswelle 24 befestigt, so dass die Spule 46 radial zur Antriebswelle 24 und parallel zur Spule 44 in einem Abstand von z.B. 1,5 mm angeordnet ist.

Auf der Antriebswelle 24 ist ferner ein Drehmomentsensor 52 in Form eines Dehnungsmessstreifens aufgeklebt und mit aufgeklebten Lötstützpunkten verdrahtet. Die erste Bestückungsplatine 45 ist hier nur beispielhaft dargestellt. Sie kann auch entfernt von der Antriebswelle 24 im Gehäuse 12 angebracht und mittels (möglichst kurzer) Kabel mit der ersten Spule 44 verbunden sein.

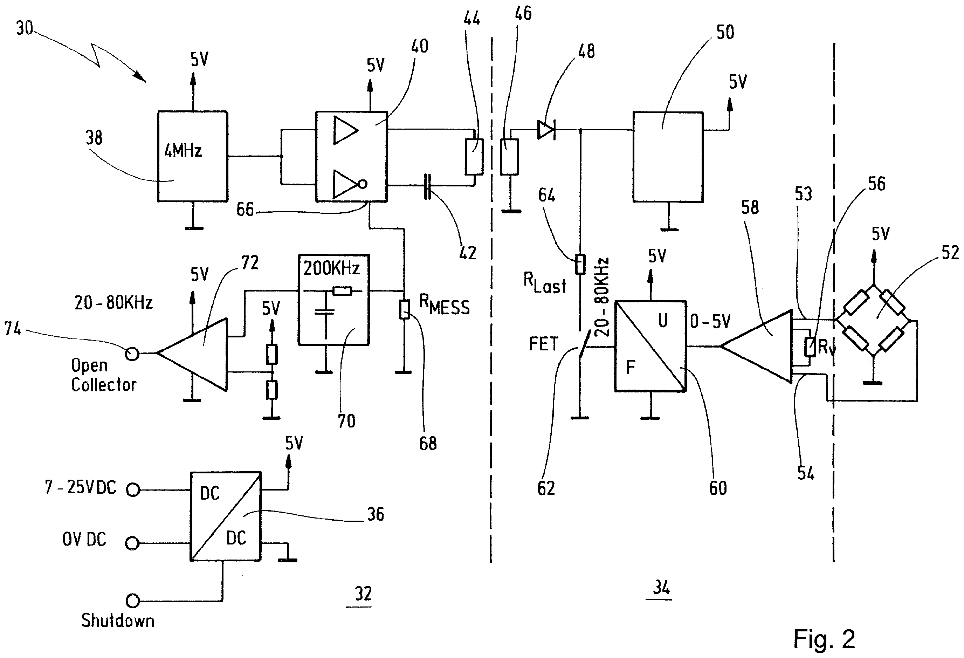

Die Funktion der Drehmomentmesseinrichtung 30 wird nunmehr anhand von Fig. 2 näher beschrieben.

Auf der ersten, stationären Baugruppe 32 ist ein universelles Gleichspannungsnetzteil 36 mit einem Eingangsspannungsbereich von 7 bis 25 Volt vorgesehen. Es versorgt die gesamte Baugruppe 32 mit geregelten 5 Volt. Diese Ausführung ist für einen akkubetriebenen Schrauber besonders geeignet. Sollte der Schrauber jedoch netzbetrieben sein oder bereits eine entsprechend stabilisierte Gleichspannung von 5 Volt bereitstellen, so kann entweder ein geeignetes AC/DC-Netzteil verwendet werden bzw. auf das Netzteil ganz verzichtet werden.

Die stationäre Spule 44 wird mit einer HF-Spannung von 4 MHz als Trägersignal beaufschlagt. Hierzu erzeugt ein Oszillator 38 eine Rechteckspannung von 4 MHz. Diese wird auf eine invertierende und eine nicht invertierende MOSFET-Treiberstufe 40 gegeben. Diese Treiberstufe 40 liefert am Ausgang ein differentielles Ausgangssignal mit 10 V und 4 MHz. Dieses wird über einen Kondensator 42, der als Gleichspannungsentkoppler benötigt wird, auf die stationäre Spule 44 übertragen.

Das Trägersignal von 4 MHz wird von der stationären Spule 44 durch induktive Kopplung auf die rotierende Spule 46 übertragen. Das Signal wird mittels eines schnellen Gleichrichters 48 gleichgerichtet und mittels Kondensatoren geglättet. Die ungeregelte Spannung hat ca. 10 Volt. Diese wird über einen hochpräzisen und temperaturneutralen Spannungsregler zu einer Referenzspannung von 5 Volt umgeformt, mit der die gesamte Elektronik auf der zweiten Schaltplatine 34 versorgt wird.

Der Drehmomentsensor 52 in Form des Dehnungsmessstreifens ist als Widerstandsmessbrücke ausgeführt. Er ist mit vier Litzen an die zweite Schaltplatine 34 angeschlossen. Zwei Litzen sind für die Versorgung des Dehnungsmessstreifens mit der Referenzspannung von 5 V, die beiden anderen Litzen führen die Sensorsignale des Dehnungsmessstreifens, welche proportional zum Drehmoment sind. Die beiden Ausgänge 53, 54 des Dehnungsmessstreifens sind einem Präzisionsverstärker 58 zugeführt, der die Messsignale in eine Ausgangsspannung von 0 bis 5 Volt aufbereitet. Der Verstärker 58 wird mit einem Widerstand 56 Rᵥ auf die Eigenschaften der Antriebswelle 24 vorabgeglichen.

Dieses Signal von 0 bis 5 V wird mittels eines Spannungs-Frequenz-Wandlers in eine Messfrequenz von 20 KHz bis 80 KHz (Rechteck-TTL) umgewandelt. Mit dieser Messfrequenz wird ein Lastwiderstand 64 R_{Last} über einen elektronischen Schalter 62 in Form eines FETs auf die ungeregelte Gleichspannung (nach dem Gleichrichter 48) aufgeschaltet. Die in der Spule 46 induzierte und über den Gleichrichter 48 gleichgerichtete Spannung wird also zusätzlich über den Widerstand 64 im Takt der Messfrequenz belastet. Dies hat zwar keine Auswirkungen auf den Spannungsregler 50, mit dem die Referenzspannung von 5 V erzeugt wird, jedoch führt diese zusätzliche Last zu einer entsprechenden Stromerhöhung durch die stationäre Spule 44. So wird auf das Trägersignal von 4 MHz das Messsignal von 20 bis 80 KHz aufmoduliert.

Der Treiber 40 für die stationäre Spule 44 muss synchron mit der Messfrequenz entsprechend mehr Strom liefern.

Um nun das Messsignal abzugreifen, ist der Masseanschluss 66 des Treibers 40 nicht direkt mit Masse verbunden, sondern über einen Strommesswiderstand 68 R_{MESS}. Am Strommesswiderstand 68 fällt somit eine Spannung mit der Trägerfrequenz von 4 MHz ab, die mit der Messfrequenz von 20 KHz bis 80 KHz überlagert ist. Zur Aufbereitung des Signals wird daher ein Tiefpass-Filter 70 von 200 KHz nachgeschaltet, um die HF-Frequenz von 4 MHz zu unterdrücken. Das so erhaltene Messsignal wird mittels eines Komparators 72 detektiert und in ein 5 V-TTL-Signal aufbereitet. Das Drehmomentausgangssignal steht somit als Rechtecksignal mit 20 bis 80 KHz an einem Open-Collector-Ausgang 74 des Komparators 72 zur Verfügung.

Die Messfrequenz von 80 KHz...50 KHz...20 KHz entspricht proportional dem Drehmoment (+100 %...0 %...-100 %). Die Messfrequenz ist somit direkt proportional dem Drehmoment. Das Drehmoment hängt lediglich von den Abmessungen und dem Werkstoff der Motorwelle 20 ab. Es kann eine Eichung des Messwertes in Nm durchgeführt werden, wozu die Elektronik entsprechend abgeglichen werden kann.

Die erhaltene Messfrequenz am Ausgang 74 kann nun weiter verarbeitet werden, um beispielsweise eine präzise Abschaltung des Schraubers bei Erreichen eines vorgegebenen Drehmomentes zu gewährleisten und kann beispielsweise in einem Speicher erfasst werden, der zu Dokumentationszwecken ausgelesen werden kann.

## Patentansprüche

1. Elektrowerkzeug, mit einer berührungslosen Drehmomentmesseinrichtung (30), mit einem in einem Gehäuse (12) aufgenommenen Motor (14), mit einer Motorwelle (20), die eine Antriebswelle (24) zum Antrieb eines Werkzeugs (28) antreibt, mit einer ersten stationär aufgenommenen Spule (44) und mit einer zweiten an der Antriebswelle (24) oder der Motorwelle (20) aufgenommenen Spule (46), die mit einem Drehmomentsensor (52) gekoppelt ist, **dadurch gekennzeichnet, dass** die beiden Spulen (44, 46) zur bidirektionalen Energieübertragung induktiv miteinander gekoppelt sind, indem über die beiden Spulen (44, 46) ein Trägersignal übertragen wird, das mit einer für das Ausgangssignal des Drehmomentsensors repräsentativen Frequenz moduliert wird, um den Drehmomentsensor (52) mittels des Trägersignals mit Energie zu versorgen, und um ein Ausgangssignal des Drehmomentsensors (52) mittels des Trägersignals von der zweiten Spule (46) auf die erste Spule (44) zu übertragen und zur Erzeugung eines Drehmomentausgangssignals auszuwerten.

2. Elektrowerkzeug nach Anspruch 1, **dadurch gekennzeichnet, dass** das Trägersignal ein hochfrequentes Signal ist und das Modulationssignal ein Signal mit einer niedrigeren Frequenz als das Trägersignal ist.

3. Elektrowerkzeug nach einem der vorhergehenden Ansprüche, **dadurch gekennzeichnet, dass** die erste Spule (44) mit einer ersten Treiberschaltung (38, 40) gekoppelt ist, über die ein Trägersignal auf die erste Spule (44) übertragen wird, dass die zweite Spule (46) mit einer Versorgungsschaltung (48, 50) gekoppelt ist, die aus dem Trägersignal eine Versorgungsspannung erzeugt, dass der Drehmomentsensor (52) ein Ausgangssignal erzeugt, das über eine zweite Treiberschaltung (58, 60, 62) als Modulationssignal auf das Trägersignal aufmoduliert wird, und wobei die erste Spule (44) mit einer Auswerteschaltung (68, 70, 72) gekoppelt ist, die das Modulationssignal auswertet, um ein Drehmomentausgangssignal zu erzeugen, das repräsentativ für ein auf die Antriebswelle (24) wirkendes Drehmoment ist.

4. Elektrowerkzeug nach einem der vorhergehenden Ansprüche, **dadurch gekennzeichnet, dass** die Spulen (44, 46) Windungen (80) in Form von Leiterbahnen auf elektronischen Leiterplatten aufweisen.

5. Elektrowerkzeug nach einem der vorhergehenden Ansprüche, **dadurch gekennzeichnet, dass** die beiden Spulen (44, 46) die gleiche Windungszahl und Geometrie aufweisen.

6. Elektrowerkzeug nach einem der vorhergehenden Ansprüche, **dadurch gekennzeichnet, dass** die beiden Spulen (44, 46) spiralförmig angeordnete Windungen (80) aufweisen.

7. Elektrowerkzeug nach einem der vorhergehenden Ansprüche, **dadurch gekennzeichnet, dass** die zweite Spule (46) über einen Gleichrichter (48) mit einem Spannungsregler (50) verbunden ist, der eine Referenzspannung erzeugt.

8. Elektrowerkzeug nach Anspruch 7, **dadurch gekennzeichnet, dass** der Drehmomensensor (52) in Form eines Dehnungsmessstreifens als Widerstandsmessbrücke ausgeführt ist, von der zwei Anschlüsse mit der Referenzspannung versorgt sind und zwei Anschlüsse mit dem Dehnungsmessstreifen (52) verbunden sind, und wobei der Ausgang (53, 54) der Widerstandsmessbrücke mit einem Verstärker (58) gekoppelt ist.

9. Elektrowerkzeug nach einem der vorhergehenden Ansprüche, **dadurch gekennzeichnet, dass** das Ausgangssignal des Drehmomentsensors (52) über einen Spannungs-Frequenz-Wandler (60) in ein frequenzmoduliertes Signal umgesetzt wird.

10. Elektrowerkzeug nach Anspruch 9, **dadurch gekennzeichnet, dass** das Ausgangssignal des Spannungs-Frequenz-Wandlers (60) über einen Lastwiderstand (64) auf das Trägersignal an der zweiten Spule (46) aufmoduliert wird.

11. Elektrowerkzeug nach einem der Ansprüche 4 bis 10, **dadurch gekennzeichnet, dass** die erste Treiberschaltung einen Oszillator (38) aufweist, dessen Ausgangssignal mit der ersten Spule (44) gekoppelt ist.

12. Elektrowerkzeug nach Anspruch 11, **dadurch gekennzeichnet, dass** im Stromkreis der ersten Spule (44) ein Stromsensor (68), der mit einer Auswerteelektronik (70, 72) zur Verstärkung des aufmodulierten Signals gekoppelt ist.

13. Elektrowerkzeug nach Anspruch 12, **dadurch gekennzeichnet, dass** die am Stromsensor (68) abfallende Spannung über ein Filter (70) mit einem Komparator (72) gekoppelt ist, der als Drehmomentausgangssignal eine dem Drehmoment proportionale Messfrequenz ausgibt.

14. Verfahren zur Messung des Drehmomentes bei einem Elektrowerkzeug (10), bei dem an eine stationär angeordnete erste Spule (44) ein Signal übertragen wird, mittels dessen eine damit induktiv gekoppelte an einer Motorwelle (20) oder an einer damit gekoppelten Antriebswelle (24) angeordnete zweite Spule (46) mit Energie versorgt wird, und bei dem ein Drehmoment der Antriebswelle (24) über einen Drehmomentsensor (52) erfasst wird und auf das Signal aufmoduliert wird, das auf die erste Spule (44) übertragen wird, und bei dem das aufmodulierte Signal zur Ausgabe eines Drehmomentausgangssignals ausgewertet wird, das repräsentativ für das Ausgangssignal des Drehmomentsensors (52) ist.

## Claims

1. An electric power tool comprising a non-contact torque measuring device (30), a motor (14) received within a housing (12), further comprising a motor shaft (20) driving a drive shaft (24) for driving a tool (28), further comprising a first coil (44) that is stationary received and a second coil (46) that is received at the drive shaft (24) or at the motor shaft (20) and that is coupled with a torque sensor (52), **characterized in that** the two coils (44, 46) are inductively coupled with each other for bi-directional energy transfer, by transmitting a carrier signal via the two coils (44, 46) that is modulated with a frequency that is representative for the output signal of the torque sensor for providing the torque sensor (52) with energy by means of the carrier signal, and for transmitting an output signal of the torque sensor (52) by means of the carrier signal of the second coil (46) onto the first coil (44) and for evaluating to generate a torque output signal.

2. The electric power tool of claim 1, **characterized in that** the carrier signal is a high frequency signal, and **in that** the modulation signal is a signal with a frequency lower than the frequency of the carrier signal.

3. The electric power tool of any of the preceding claims, **characterized in that** the first coil (44) is coupled with a first driver circuit (38, 40) by means of which the carrier signal is transmitted onto the first coil (44), **in that** the second coil (46) is coupled with a supplier circuit (48, 50) that generates a supplying voltage from the carrier signal, **in that** the torque sensor (52) generates an output signal that is modulated by means of a second driver circuit (58, 60, 62) onto the carrier signal as a modulation signal, and wherein the first coil (44) is coupled with an evaluation circuit (68, 70, 72) that evaluates the modulation signal for generating a torque output signal being representative for a torque acting onto the drive shaft (24).

4. The electric power tool of any of the preceding claims, **characterized in that** the coils (44, 46) comprise windings (80) being configured as circuit paths on electronic circuit boards.

5. The electric power tool of any of the preceding claims, **characterized in that** the two coils (44, 46) have the same number of windings and the same geometry.

6. The electric power tool of any of the preceding claims, **characterized in that** the two coils (44, 46) comprise windings (80) that are arranged in spiral shape.

7. The electric power tool of any of the preceding claims, **characterized in that** the second coil (46) by means of a rectifier (48) is coupled with a voltage regulator (50) that generates a reference voltage.

8. The electric power tool of claim 7, **characterized in that** the torque sensor (52) is configured as a strain measuring strip within a resistance measuring bridge, two connections of which are powered with the reference voltage and two connections of which are connected with the strain measuring strip (52), and wherein the output (53, 54) of the resistance measuring bridge is coupled with an amplifier (58).

9. The electric power tool of any of the preceding claims, **characterized in that** the output signal of the torque sensor (52) is converted into a frequency-modulated signal by means of a voltage-frequency-converter (60).

10. The electric power tool of claim 9, **characterized in that** the output signal of the voltage-frequency-converter (60) is modulated onto the carrier signal of the second coil (46) by means of a load resistance (64).

11. The electric power tool of any of claims 4 to 10, **characterized in that** the first driver circuit comprises an oscillator (38), the output signal of which is coupled to the first coil (44).

12. The electric power tool of claim 11, **characterized in that** within the current circuit of the first coil (44) there is a current sensor (68) that is coupled to an evaluation electronics (70, 72) for amplifying the modulated signal.

13. The electric power tool of claim 12, **characterized in that** the voltage falling off at the current sensor (68) is coupled by means of a filter (70) to a comparator (72) that outputs as the torque measuring signal a measuring frequency that is proportional to the torque.

14. A method for measuring a torque on an electric power tool (10), wherein a signal is transmitted to a first coil (44) that is arranged stationary, by means of which a second coil (46) that is arranged inductively coupled to a motor shaft (20) or to a drive shaft (24) coupled therewith is supplied with energy, and wherein a torque moment of the drive shaft (24) is detected by means of a torque sensor (52) and modulated onto the signal that is transmitted to the first coil (44), and wherein the modulated signal is evaluated for outputting a torque output signal that is representative for the output signal of the torque sensor (52).

## Revendications

1. Outil électrique comportant un dispositif de mesure de couple sans contact (30), un moteur (14) logé dans un carter (12), un arbre moteur (20) entraînant un arbre d'entraînement (24) destiné à entraîner un outil (28), une première bobine logée de manière stationnaire (44) et une seconde bobine (46) logée sur l'arbre d'entraînement (24) ou l'arbre moteur (20) et couplée à un capteur de couple (52), **caractérisé en ce que** les deux bobines (44, 46) sont couplées l'une à l'autre par induction pour la transmission bidirectionnelle d'énergie, en transmettant par l'intermédiaire des deux bobines (44, 46) un signal porteur qui est modulé à une fréquence représentative du signal de sortie du capteur de couple, afin d'alimenter le capteur de couple (52) en énergie au moyen du signal porteur, et de transmettre un signal de sortie du capteur de couple (52) au moyen du signal porteur de la seconde bobine (46) à la première bobine (44) et de l'évaluer pour générer un signal de sortie de couple.

2. Outil électrique selon la revendication 1, **caractérisé en ce que** le signal porteur est un signal à haute fréquence et **en ce que** le signal de modulation est un signal ayant une fréquence inférieure à celle du signal porteur.

3. Outil électrique selon l'une des revendications précédentes, **caractérisé en ce que** la première bobine (44) est couplée à un premier circuit d'attaque (38, 40) par le biais duquel un signal porteur est transmis à la première bobine (44), **en ce que** la seconde bobine (46) est couplée à un circuit d'alimentation (48, 50) qui génère une tension d'alimentation à partir du signal porteur, **en ce que** le capteur de couple (52) génère un signal de sortie qui est modulé sur le signal porteur par l'intermédiaire d'un second circuit d'attaque (58, 60, 62) en tant que signal de modulation, et dans lequel la première bobine (44) est couplée à un circuit d'évaluation (68, 70, 72) qui évalue le signal de modulation afin de générer un signal de sortie de couple qui est représentatif d'un couple agissant sur l'arbre d'entraînement (24).

4. Outil électrique selon l'une des revendications précédentes, **caractérisé en ce que** les bobines (44, 46) comportent des enroulements (80) sous forme de pistes conductrices sur des cartes électroniques.

5. Outil électrique selon l'une des revendications précédentes, **caractérisé en ce que** les deux bobines (44, 46) présentent le même de spires et la même géométrie.

6. Outil électrique selon l'une des revendications précédentes, **caractérisé en ce que** les deux bobines (44, 46) comportent des enroulements (80) disposés en hélice.

7. Outil électrique selon l'une des revendications précédentes, **caractérisé en ce que** la seconde bobine (46) est reliée par l'intermédiaire d'un redresseur (48) à un régulateur de tension (50) qui génère une tension de référence.

8. Outil électrique selon la revendication 7, **caractérisé en ce que** le capteur de couple (52), sous forme de jauge de contrainte, est réalisé en tant que pont de mesure de résistance, dont deux connexions sont alimentées avec la tension de référence et dont deux connexions sont reliées à la jauge de contrainte (52), et dans lequel la sortie (53, 54) du pont de mesure de résistance est couplée à un amplificateur (58).

9. Outil électrique selon l'une des revendications précédentes, **caractérisé en ce que** le signal de sortie du capteur de couple (52) est converti en un signal modulé en fréquence par l'intermédiaire d'un convertisseur tension-fréquence (60).

10. Outil électrique selon la revendication 9, **caractérisé en ce que** le signal de sortie du convertisseur tension-fréquence (60) est modulé sur le signal porteur au niveau de la seconde bobine (46) par l'intermédiaire d'une résistance de charge (64).

11. Outil électrique selon l'une des revendications 4 à 10, **caractérisé en ce que** le premier circuit d'attaque comprend un oscillateur (38) dont le signal de sortie est couplé à la première bobine (44).

12. Outil électrique selon la revendication 11, **caractérisé en ce qu'**un capteur de courant (68), qui est couplé à une électronique d'évaluation (70, 72) pour amplifier le signal modulé, est monté dans le circuit de la première bobine (44).

13. Outil électrique selon la revendication 12, **caractérisé en ce que** la chute de tension au niveau du capteur de courant (68) est couplée, par l'intermédiaire d'un filtre (70), à un comparateur (72) qui délivre une fréquence de mesure proportionnelle au couple en tant que signal de sortie de couple.

14. Procédé pour mesurer le couple d'un outil électrique (10), dans lequel un signal est transmis à une première bobine disposée de manière stationnaire (44), au moyen duquel une seconde bobine (46), couplée à celle-ci par induction et disposée sur un arbre moteur (20) ou sur un arbre d'entraînement (24) couplé à ce dernier, est alimentée en énergie, et dans lequel un couple de l'arbre d'entraînement (24) est détecté par l'intermédiaire d'un capteur de couple (52) et est modulé sur le signal qui est transmis à la première bobine (44), et dans lequel le signal modulé est évalué pour délivrer un signal de sortie de couple qui est représentatif du signal de sortie du capteur de couple (52).
